# EUROPEAN PATENT APPLICATION

(11) **EP 4 530 687 A1**
(43) Date of publication of application: **02.04.2025**
(21) Application number: 24202907.2
(22) Date of filing: 26.09.2024
(51) Int. Cl.: G02B 6/12, G02B 6/122, G02B 6/125, G02B 6/28

(54) **BROADBAND MULTIMODE WAVEGUIDE INTERFACES**

(30) Priority: 30.09.2023 US 202363541799 P; 13.09.2024 US 202418885255
(71) Applicant: Apple Inc., Cupertino, CA 95014 (US)
(72) Inventor: ARBORE, Mark A., Cupertino, California, 95014 (US)
(74) Representative: Simmons & Simmons

(57) **Abstract**

A photonic integrated circuit as discussed herein may include one or more multimode waveguide interfaces that define a corresponding transition between a waveguide and a free propagation region of a photonic integrated circuit. Specifically, a multimode waveguide interface may include an input waveguide that is connected to an interferometric waveguide, and a slab waveguide connected to the interferometric waveguide. The input waveguide and interferometric waveguide are positioned and configured to convert a portion of a first mode of light into a second mode of light, such that the first and second modes interfere within the interferometric waveguide. The interferometric waveguide is configured such that these modes are in phase for a first target wavelength and out of phase for a second target wavelength at an interface between the interferometric waveguide and the slab waveguide.

## Description

### CROSS-REFERENCE TO RELATED APPLICATIONS

This application claims the benefit under 35 U.S.C. § 119(e) of U.S. Provisional Patent Application No. 63/541,799, filed September 30, 2023, the contents of which are incorporated herein by reference as if fully disclosed herein.

### TECHNICAL FIELD

This disclosure relates generally to routing light in photonic integrated circuits. More particularly, this disclosure relates to waveguide interfaces that are designed to reduce the wavelength dependency of diffraction that occurs as light transitions between a waveguide and a free propagation region.

### BACKGROUND

Photonic integrated circuits generally use waveguides to route light between different optical components for a variety of purposes. Depending on the application, a photonic integrated circuit may be configured to route light having a relatively wide range of wavelengths. In these instances, it may be desirable to configure the various optical components of a photonic integrated circuit to operate similarly across these wavelengths.

### SUMMARY

Embodiments described herein relate to photonic integrated circuits that include multimode waveguide interfaces. Some embodiments are directed to a photonic integrated circuit with a light source unit operable to generate light at a plurality of wavelengths spanning an operating wavelength range and a multimode waveguide interface. The multimode waveguide interface includes an input waveguide positioned to receive light of the plurality of wavelengths, an interferometric waveguide connected to the input waveguide at a first interface, and a slab waveguide connected to the interferometric waveguide at a second interface. The interferometric waveguide is configured to convert, for each wavelength in the operating wavelength range, a portion of a first mode of light into a second mode of light. The interferometric waveguide is configured such that, for a first target wavelength in the operating wavelength range, the first mode of light and second mode of light will be in phase at the second interface. The interferometric waveguide is also configured such that, for a second target wavelength in the operating wavelength range, the first mode of light and second mode of light will be out of phase at the second interface.

In some of these variations, the second target wavelength is longer than the first target wavelength. The first mode may be a TE00 mode and the second mode may a TE02 mode. In some variations, the input waveguide is centered relative to the interferometric waveguide. Additionally or alternatively, the interferometric waveguide comprises a tapered section. In some variations, the photonic integrated circuit may include an optical splitter that utilizes the multimode waveguide interface. The optical splitter may include the input waveguide, the interferometric waveguide, the slab waveguide, and a plurality of output waveguides.

Some embodiments are directed to a photonic integrated circuit with a light source unit operable to generate light at a plurality of wavelengths spanning an operating wavelength range and a multimode waveguide interface. The multimode waveguide interface includes an input waveguide having a first width and positioned to receive light of the plurality of wavelengths, an interferometric waveguide having a second width and connected to the input waveguide at a first interface, and a slab waveguide connected to the interferometric waveguide at a second interface.

In some of these embodiments, the first width is narrower than the second width and the interferometric waveguide is configured to convert, for each wavelength in the operating wavelength range, a portion of a first mode of light into a second mode of light, such that the first and second modes have a phase difference with a corresponding half beat length. The interferometric waveguide has a length that is, for a first target wavelength in the operating wavelength range, an even integer number of half beat lengths. The length is also, for a second target wavelength in the operating wavelength range, an odd integer number of half beat lengths. In some of these variations, the second target wavelength is longer than the first target wavelength. Additionally or alternatively, the first and second target wavelengths are separated by a half beat length. In some variations, a wavelength ratio between the first wavelength and the second wavelength is 1:2.

In some of these variations, the second target wavelength is longer than the first target wavelength. The first mode may be a TE00 mode and the second mode may a TE02 mode. In some variations, the input waveguide is centered relative to the interferometric waveguide. Additionally or alternatively, the interferometric waveguide comprises a tapered section. In some variations, the photonic integrated circuit may include an optical splitter that utilizes the multimode waveguide interface. The optical splitter may include the input waveguide, the interferometric waveguide, the slab waveguide, and a plurality of output waveguides.

In some embodiments, the first width is wider than the second width and the interferometric waveguide is configured to convert, for each wavelength in the operating wavelength range, a portion of a first mode of light into a second mode of light, such that the first and second modes have a phase difference with a corresponding half beat length. The interferometric waveguide has a length that is, for a first target wavelength in the operating wavelength range, an odd integer number of half beat lengths. The length is also, for a second target wavelength in the operating wavelength range, an even integer number of half beat lengths. In some of these variations, the second target wavelength is longer than the first target wavelength. Additionally or alternatively, the first and second target wavelengths are separated by a half beat length. In some variations, a wavelength ratio between the first wavelength and the second wavelength is 2:3.

In some of these variations, the second target wavelength is longer than the first target wavelength. The first mode may be a TE00 mode and the second mode may a TE02 mode. In some variations, the input waveguide is centered relative to the interferometric waveguide. Additionally or alternatively, the interferometric waveguide comprises a tapered section. In some variations, the photonic integrated circuit may include an optical splitter that utilizes the multimode waveguide interface. The optical splitter may include the input waveguide, the interferometric waveguide, the slab waveguide, and a plurality of output waveguides.

In addition to the example aspects and embodiments described herein, further aspects and embodiments will become apparent by reference to the drawings and by study of the following description.

### BRIEF DESCRIPTION OF THE DRAWINGS

Reference will now be made to representative embodiments illustrated in the accompanying figures. It should be understood that the following descriptions are not intended to limit this disclosure to one included embodiment. To the contrary, the disclosure provided herein is intended to cover alternatives, modifications, and equivalents as may be included within the spirit and scope of the described embodiments, and as defined by the appended claims.
FIG. 1 shows a schematic diagram of a photonic integrated circuit that includes a waveguide interface.
FIG. 2 shows a perspective view of a portion of a photonic integrated circuit that includes a waveguide interface.
FIGS. 3A-3C shows top views of variations of photonic integrated circuits that include multimode waveguide interfaces as described herein.
FIG. 4 depicts a top view of a portion of a photonic integrated circuit that includes a multimode waveguide interface and an output facet.
FIG. 5 depicts a top view of a portion of a photonic integrated circuit that includes a multimode waveguide interface as part of an optical splitter.

It should be understood that the proportions and dimensions (either relative or absolute) of the various features and elements (and collections and subsettings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

Directional terminology, such as "top", "bottom", "upper", "lower", "front", "back", "over", "under", "above", "below", "left", "right", "vertical", "horizontal", *etc.* is used with reference to the orientation of some of the components in some of the figures described below, and is not intended to be limiting. Because components in various embodiments can be positioned in a number of different orientations, directional terminology is used for purposes of illustration to demonstrate the relative orientation between components of the systems and devices described herein. The directional terminology is intended to be construed broadly, and therefore should not be interpreted to preclude components being oriented in different ways. Also, as used herein, the phrase "at least one of" preceding a series of items, with the term "and" or "or" to separate any of the items, modifies the list as a whole, rather than each member of the list. The phrase "at least one of" does not require selection of at least one of each item listed; rather, the phrase allows a meaning that includes at a minimum one of any of the items, and/or at a minimum one of any combination of the items, and/or at a minimum one of each of the items. By way of example, the phrases "at least one of A, B, and C" or "at least one of A, B, or C" each refer to only A, only B, or only C; any combination of A, B, and C; and/or one or more of each of A, B, and C. Similarly, it may be appreciated that an order of elements presented for a conjunctive or disjunctive list provided herein should not be construed as limiting the disclosure to only that order provided.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

The following disclosure relates to photonic integrated circuits that include one or more multimode waveguide interfaces that define a corresponding transition between a waveguide and a free propagation region of a photonic integrated circuit. Specifically, a multimode waveguide interface may include an input waveguide that is connected to an interferometric waveguide, and a slab waveguide connected to the interferometric waveguide. The input waveguide and interferometric waveguide are positioned and configured to convert a portion of a first mode of light into a second mode of light, such that the first and second modes interfere within the interferometric waveguide. These interferometric waveguide is configured such that these modes are in phase at an interface between the interferometric waveguide and the slab waveguide for a first target wavelength and out of phase at the interface for a second target wavelength.

Waveguides can be used in photonic integrated circuits to route light between different components of the photonic integrated circuit. A waveguide may be shaped to optically confine light within the waveguide, thereby allowing the waveguide to carry and direct light within the photonic integrated circuit. In some instances, a waveguide may terminate at a free propagation region in which the light is no longer confined in one or more dimensions. This allows a beam of light that was previously confined in a waveguide to expand in one or more dimensions as it travels through the photonic integrated circuit. In some instances, an interface between a waveguide and a free propagation region may be used to expand a width of a beam of light before it exits a photonic integrated circuit (e.g., via a facet of the photonic integrated circuit). Similarly, optical components such as optical splitters, multiplexers, or the like may utilize one or more interfaces between waveguides and free propagation region.

In some instances, it may be desirable for a photonic integrated circuit, as well as any optical systems incorporating a photonic integrated circuit, to be able to operate over a wide range of wavelengths. Depending on the intended use of a given optical system (e.g., performing spectroscopic measurements, optical signal transmission or processing, or the like), a light source unit as described herein may be operable to generate light at multiple wavelengths spanning hundreds of nanometers, and the various optical components of a photonic integrated circuit that routes this light may be designed to accommodate wavelengths spanning some or all of this range. In these instances, it is desirable for a given optical component to have a similar level of performance regardless of the wavelength of light it receives.

When a waveguide terminates into a free propagation region (e.g., a slab waveguide) within a photonic integrated circuit, the light will diffract as it enters the free propagation region. When light, such as light having a single mode (e.g., a fundamental mode), enters a free propagation region from a waveguide, the angle of diffraction for a given wavelength of light depends on the ratio between the wavelength and the mode size of that light as it reaches the free propagation region. Because the waveguide optically confines light within the waveguide, different wavelengths may have a same or similar mode size upon entering the free propagation region, which can result in different diffraction angles for different wavelengths of light. This in turn may cause the beam size in the free propagation region to vary as a function of wavelength, potentially resulting in wavelength-dependent variations in performance of components of the photonic integrated circuit.

To help reduce this wavelength dependency, the waveguide may be sized to be sufficiently narrow (e.g., via tapering) as it approaches an interface with the slab waveguide, such that confinement of light in the waveguide is reduced in a waveguide-dependent manner. This may result in the size of the mode of light carried by the waveguide becomes proportional to the wavelength of the light across a certain range of wavelengths. Accordingly, when the output waveguide is configured to carry a particular range of wavelengths, the width of the waveguide may be chosen based on this range of wavelengths.

Narrowing the output waveguide in this manner may improve uniformity of the diffraction angle across a range of wavelengths, but this may also increase back-reflections at the interface between the output waveguide and the slab waveguide. Specifically, because the mode of certain wavelengths may be poorly confined (e.g., to reduce the wavelength dependency of the diffraction angle), these wavelengths may experience a change in effective refractive index between the light confining regions bounding the output waveguide and the slab waveguide. This change in effective refractive index may create back reflections at the interface between the waveguide and the slab waveguide.

The photonic integrated circuits described herein may include interfaces between waveguides and free propagation regions that are configured to minimize these back reflections while still reducing the wavelength-dependence of the diffraction angle across a specific range of wavelengths.

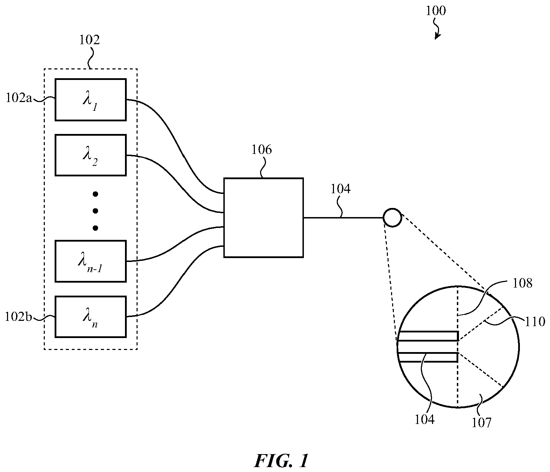

These foregoing and other embodiments are discussed below with reference to FIGS. 1-5. However, those skilled in the art will readily appreciate that the detailed description given herein with respect to these figures is for explanation only and should not be construed as limiting.

FIG. 1 shows a schematic diagram of a photonic integrated circuit 100 as described herein. Specifically, the photonic integrated circuit 100 may be configured to generate or receive light that spans a range of wavelengths. For example, the photonic integrated circuit 100 includes a light source unit 102 that has one or more light sources and is operable to generate light that spans a wavelength range. To the extent that the light source unit 102 includes multiple light sources, the photonic integrated circuit 100 may include one or more multiplexers 106 that are configured to combine light generated by the light source unit 102 into a single waveguide 104. In this way, the waveguide 104 is optically connected to the light source unit 102. The waveguide 104 may transition into a slab waveguide 107 (which acts as a free propagation region) at an interface (represented by line 108) between the waveguide 104 and the slab waveguide 107. In effect, the waveguide 104 terminates at the interface 108 as light is no longer confined in at least one dimension. Overall, light generated by the light source unit 102 will be routed to the interface 108 and will be emitted from the waveguide 104 as a diverging light beam 110.

Overall, the photonic integrated circuit 100 may be configured such that the waveguide 104 receives light from the light source unit 102 at a plurality of different wavelengths. The plurality of different wavelengths spans a wavelength range (referred to herein as an "operating wavelength range") that includes a maximum wavelength of the operating wavelength range and a minimum wavelength range of the operating wavelength range. In other words, the light source unit 102 includes at least one light source configured to emit light at the minimum wavelength and at least one light source configured to emit light at the maximum wavelength.

For example, the light source unit 102 shown in FIG. 1 includes a first light source 102a operable to generate light at a first wavelength λ₁ that is the shortest (e.g., minimum) wavelength that may be routed to the waveguide 104 during operation of the photonic integrated circuit 100. Similarly, the light source unit 102 includes a second light source 102b operable to generate light at a second wavelength λ_{N} that is the longest (e.g., maximum) wavelength that may be routed to the waveguide 104 during operation of the photonic integrated circuit 100. The first and second light sources 102a, 102b define the boundaries of the operating wavelength range for the waveguide 104. The light source unit 102 may be include one or more additional light sources that operable to emit light at one or more wavelengths within the operating wavelength range.

The operating range of wavelengths for the waveguide 104 may depend on the requirements of an optical system that incorporates the photonic integrated circuit 100, and in some instances the waveguide 104 may receive light at wavelengths across a relatively wide operating wavelength range. For example, in some variations the operating wavelength range spans at least 300 nanometers (i.e., the difference in wavelength between the maximum wavelength and the minimum wavelength is at least 300 nanometers). In some of these variations, the operating wavelength range spans at least 600 nanometers (i.e., the difference in wavelength between the maximum wavelength and the minimum wavelength is at least 600 nanometers). In some of these variations, the operating wavelength range spans at least 900 nanometers (i.e., the difference in wavelength between the maximum wavelength and the minimum wavelength is at least 900 nanometers).

It should be appreciated that, depending on the operation of the photonic integrated circuit 100, the waveguide 104 may not receive all of the plurality of wavelengths simultaneously. Accordingly, when a light source unit is described herein as being operable to generate light at a plurality of different wavelengths (e.g., that span the operating wavelength range), the light source unit need not be operated to simultaneously generate (or in some instances, even be capable of simultaneously generating) all of these wavelengths. The light source unit 102 may simultaneously generate the plurality of different wavelengths, or may generate different wavelengths (or groups of wavelengths) at different times. When a waveguide is discussed herein as receiving a plurality of different wavelengths (e.g., that spans the operating the wavelength range), it should be appreciated that the waveguide 104 may similarly receive these wavelength simultaneously or at different times (e.g., during different operating modes of the photonic integrated circuit 100). Additionally, the light source unit need not be able to generate the entire spectrum within the operating wavelength range (e.g., every wavelength between the longest and shortest wavelength of the operating range), and in some instances may only generate a discrete number of wavelengths within the operating wavelength range.

Each light source of the light source unit 102 is selectively operable to emit light at a corresponding set of wavelengths. Each light source may be any component capable of generating light at one or more particular wavelengths, such as a light-emitting diode or a laser. A laser may include a semiconductor laser, such as a laser diode (e.g., a distributed Bragg reflector laser, a distributed feedback laser, an external cavity laser), a quantum cascade laser, or the like. A given light source may be single-frequency (fixed wavelength) or may be tunable to selectively generate one of multiple wavelengths (i.e., the light source may be controlled to output different wavelengths at different times). The set of light sources may include any suitable combination of light sources, and collectively may be operated to generate light at any of a plurality of different wavelengths. Accordingly, the light beam 110 emitted from the waveguide 104 may include, at a given time, any wavelength or combination of wavelengths in the operating range of wavelengths depending on the photonic integrated circuit 100.

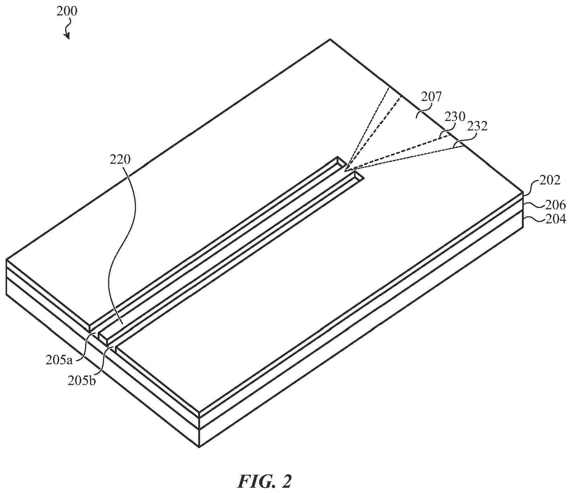

The waveguide 104 and the slab waveguide 107 (that defines a free propagation region) may each be formed as part of a planar waveguide layer of a photonic integrated circuit. For example, FIG. 2 shows a perspective view of a portion of a photonic integrated circuit 200 as described herein. Specifically, the photonic integrated circuit 200 may include a planar waveguide layer 202 that is supported by a substrate 204. In some instances a cladding layer 206 is positioned between the substrate 204 and the waveguide layer 202, such that the substrate 204 supports the cladding layer 206, and the cladding layer 206 supports the waveguide layer 202. The cladding layer 202 may help to confine light within a plane of the waveguide layer 202, and the photonic integrated circuit 200 may include additional cladding layers positioned in contact with other surfaces of the waveguide layer 202. The various layers of the photonic integrated circuits described herein may be formed from any suitable materials depending on the wavelength or wavelengths of light that will be carried by the waveguides defined in the photonic integrated circuit. For example, in some variations, the waveguide layer (including any waveguides defined in and formed by the waveguide layer) is formed from silicon, silicon nitride, silica, or the like, the cladding layer (or layers) is formed from a dielectric material (or materials) such as silicon dioxide, and the substrate is formed from silicon.

The waveguide layer 202 may be processed to define a waveguide 220 and a slab waveguide 207, such that the waveguide 220 terminates at an interface between the waveguide 220 and the slab waveguide 207. Specifically, the waveguide layer 202 may be etched or patterned to define a pair of cavities 205a-205b in the waveguide layer 202. These cavities may define the waveguide 220 (e.g., a first cavity 205a defines a first lateral surface of the waveguide 220 and the second cavity 205b defines a second lateral surface of the waveguide 220) and may help to confine light within the waveguide 220. In some variations, the photonic integrated circuit includes an additional cladding layer or layers that fill the cavities 205a-205b. In some of these instances, an additional cladding layer or layers may also cover a top side of the waveguide 220, such that the waveguide is surrounded by cladding layers. In other instances, the cavities 205a-205b may be left unfilled to provide an air interface to the lateral side surfaces of the waveguide 220. In some of these instances, the top surface of a waveguide may also be uncovered to provide an air interface with the top surface of the waveguide 220.

Accordingly, when light is introduced into the waveguide 220, the light may be confined within the waveguide 220 due to a refractive index difference between the waveguide 220 and its surrounding materials (e.g., the cladding layer(s) and/or air in contact with the waveguide 220). The cavities 205a-205b terminate at the interface between the waveguide 220 and the slab waveguide 207. Because the cavities 205a-205b are no longer acting to confine light in the waveguide 220, light passing from the waveguide 220 into the slab waveguide 207 may diffract and freely propagate within the slab waveguide 207. In this way, the slab waveguide 207 acts a free propagation region. It should be appreciated that while light may freely propagate laterally within the plane of the waveguide layer 220 as it travels through the slab waveguide 207, the light may still be confined vertically such that it is confined within the plane of the waveguide layer 220.

When light exits the waveguide 220 at an interface with a free propagation region (e.g., the slab waveguide), the light may diffract at the interface. The diffraction angle at which the light diffracts may depend on a wavelength of the light. For example, a first wavelength of light may diffract with a first diffraction angle to form a first light beam 230 as shown in FIG. 2. If a different second wavelength of light is introduced into the waveguide 220 (either simultaneously or sequentially with the first wavelength), the light may diffract with a different second diffraction angle to form a second light beam 232. As shown there the first light beam 230 has a relatively lower beam divergence and thus expands at a slower rate as compared to the second light beam 232. The first and second light beams 230, 232 may continue propagating until they reach another component of the photonic integrated circuit 200. Because these light beams may have a different beam size when they reach another component of the photonic integrated circuit 200, the different wavelengths of light may interact different with this component (e.g., to create wavelength-dependent losses or behavior).

Accordingly, the photonic integrated circuits described herein utilize a multi-mode waveguide interface to reduce wavelength-dependent beam diffraction as a light beam passes from a waveguide to a slab waveguide. Whereas waveguides used to route light are typically designed for single mode propagation (e.g., at a fundamental mode), the photonic integrated circuits described herein are configured to transition a single mode waveguide to an interferometric waveguide before an interface with a slab waveguide. The interferometric waveguide may be designed to reduce the wavelength dependency of the diffraction angle of light entering a slab waveguide from the interferometric waveguide.

Specifically, a waveguide interface as described herein may include an input waveguide, an interferometric waveguide, and a slab waveguide, where the interferometric waveguide is connected between the input waveguide and the slab waveguide. The input waveguide is configured to carry light of a single first mode (e.g., a fundamental mode), and the interferometric waveguide is configured to support light of at least two different modes. The input waveguide and the interferometric waveguide are configured such that, as light enters the interferometric waveguide from the input waveguide, a portion of the first mode of light is converted into a second higher order mode of light.

For example, a center of the input waveguide may be aligned with a corresponding center of the interferometric waveguide such that the higher order mode is a symmetric mode. For example, the input waveguide may be configured to carry a TE00 mode of light, and the input waveguide and the interferometer waveguide are configured to generate a TE02 mode of light from a portion the TE00 mode of light. In this way, the interferometric waveguide will simultaneously propagate light having both a first mode (e.g., the TE00) and a second mode (e.g., the TE02 mode). In these instances the multimode waveguide interface may be configured such that additional higher order modes are not excited, such that the interferometric waveguide only carries the first and second modes.

Because different modes of a given wavelength propagate through a waveguide with different velocities, a phase difference between the first and second modes may change along the length of the interferometric waveguide. Accordingly, the first and second modes will form a superposition beam (e.g., representing the first mode superimposed on the second mode) that will have a beam size that varies along a length of the interferometric depending on the phase difference between the first and second modes. When an interferometric waveguide terminates at an interface between the interferometric waveguide and a slab waveguide (acting as a free propagation region), the properties of the beam that propagates through the slab waveguide depend at least partially on the characteristics of the superposition beam at the interface. For example, when the first and second modes are in phase (e.g., a 0 phase difference between the modes) or are out of phase (e.g., a π phase difference between the modes) at the interface, the resulting light beam will propagate with a gaussian intensity profile and a flat phase front, which may be desirable in many instances.

Different wavelengths of light propagate at different velocities, and thus there is a wavelength dependency of the phase difference between the first and second modes at the interface. For example, for an interferometric waveguide of a given length, there may be certain wavelengths for which the first and second modes will be in phase, certain wavelengths for which the first and second modes will be out of phase, and the remaining wavelengths will be partially in phase (e.g., neither in phase nor out of phase). As a result, there may be wavelength dependences beam properties for light entering a slab waveguide from an interferometric waveguide.

In an example, if the waveguide is configured to receive light of a certain operating wavelength range, the dimensions of the interferometric waveguide may be selected to reduce this wavelength dependency. Specifically, the multimode waveguide interfaces are dimensioned to be different integer multiples of a half beat length for each of a first target wavelength and a second target wavelength that are within the operating wavelength range. As used herein, a "beat length" of an interferometric waveguide, refers to a length of the interferometric waveguide that will cause two mode carried by the interferometric waveguide to have a 2π phase shift. In other words, if two modes of a given wavelength in the interferometric waveguide are in phase at a certain point along a length of the interferometric waveguide, they will again be in phase after a beat length. Similarly, a half beat length refers to the length of an interferometric waveguide along which the first and second modes will undergo a π phase shift. If the two modes of a given wavelength are in phase at a certain point along the length of an interferometric waveguide, they will be out of phase after a half beat length (or vice versa).

For a given interferometric waveguide, each wavelength has a different beat length that is proportional to that beat length. For example, if an interferometric waveguide has a length that is one beat length for a first wavelength, the interferometric waveguide will be two beat lengths for a second wavelength that is half as long as the first wavelength, three beat lengths for a wavelength that is a third as long as the first wavelength. Accordingly, the ratio between two wavelengths is the same as the ratio between the beat lengths for these wavelengths in a given interferometric waveguide.

The multimode waveguide interfaces described herein are positioned in a photonic integrated circuit to receive a plurality of wavelengths (e.g., from a light source unit as described herein) that span an operating wavelength range. The multimode waveguide interface includes an interferometric waveguide that is sized such that, for a first target wavelength in the operating wavelength range, the first and second modes are in phase at an interface between the interferometric waveguide and a slab waveguide. Additionally, the interferometric waveguide is sized such that, for a second target wavelength in the operating wavelength range, the first and second modes are out of phase at an interface between the interferometric waveguide and a slab waveguide. In some instances the first and second wavelengths may be correspond to two wavelengths that are generated by the light source unit, such that the interferometric waveguide may receive the first and second target wavelengths during operation of the photonic integrated circuit. In other instances, one or both of the target wavelengths need not correspond to any of the plurality of wavelengths that are generated by the light source unit, but may instead be any wavelengths that are at least as long as the shortest wavelength of the operating wavelength range and at least as short as the longest wavelength of the operating wavelength range. Accordingly, the interferometric waveguide is designed to perform in a certain manner with respect to the first and second target wavelengths regardless of whether the light source unit is capable of generating light at the first and second wavelengths.

The first and second target wavelengths may be selected, for a given operating wavelength range, to reduce the wavelength dependency of the diffraction angle across the operating wavelength range. For each wavelength, the depends on the phase difference between the first and second modes at the interface between the interferometric waveguide and the slab waveguide. Specifically, for a given wavelength the size of the superposition beam is smallest when the first and second mode are in phase and largest when the first and second modes are out of phase. Accordingly, if the first target wavelength is smaller than the second target wavelength, the shorter first wavelength will have a smaller superposition beam size as compared to the longer second wavelength, which may reduce the wavelength dependency of the diffraction angle for these wavelengths.

For the modes of the first target wavelength to be in phase, the interferometric waveguide has a length that corresponds to a first integer number of half beat lengths. Similarly, for the modes of the second target wavelength to be out of phase, the interferometric waveguide has a length that corresponds to a second integer number of half beat lengths. If the difference between the first integer number and second integer number is one (e.g., the first and second wavelengths are separated by a half beat length), there will be no wavelengths between the first and second target wavelengths are in phase or out of phase. In these instances, superposition beam size may increase monotonically between the first and second target wavelengths, which may reduce the wavelength dependency of the diffraction angle across all wavelengths between the first and second target wavelengths. Accordingly, if the first and second target wavelengths are selected to be near the minimum and maximum wavelengths of the operating wavelength range, the multimode waveguide interface may provide a more consistent diffraction angle across the entire operating wavelength range. For example, in some variations, the first and second target wavelengths are selected to be the minimum and maximum wavelengths, respectively, of the operating wavelength range. In other variations, the first target wavelength is within 20% of the value of the minimum wavelength and the second target wavelength is within 20% of the value of the maximum wavelength.

In the instances where the first and second target wavelengths are separated by a half beat length, the ratio of the beat lengths (and thereby the wavelength ratio of the first and second target wavelengths) will be N:N+1 (since the longer wavelength will necessarily have a shorter number of half beat lengths). Accordingly, the value of N may depend on the bandwidth of the operating wavelength range. For example, a N of 1 results in a 1:2 wavelength ratio between the first and second target wavelengths (e.g., the second target wavelength is twice as long as the first target wavelength). While there may be two target wavelengths with an operating wavelength range that satisfy this ratio for wider operating wavelength ranges, smaller operating wavelength ranges may necessitate a larger N (e.g., a 2:3 ratio, a 3:4 ratio, or the like). Accordingly, the multimode waveguide interfaces may be designed with different dimensions for different operating wavelength ranges.

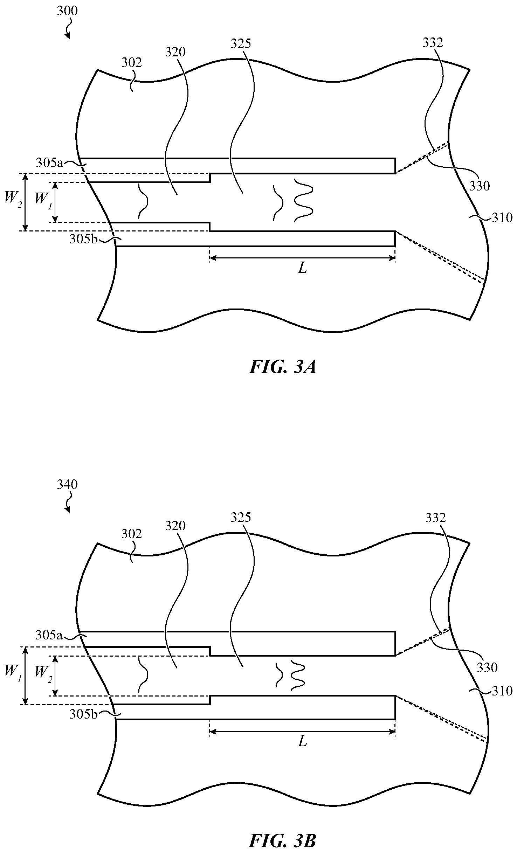

The first and second numbers of the beat lengths may depend on the configuration of the multimode waveguide interface. For example, FIGS. 3A shows a first variation of a photonic integrated circuit 300 that includes a multimode waveguide interface as described herein. Specifically, the photonic integrated circuit 300 that includes a waveguide layer 302 that is patterned to define (e.g., using first and second cavities 305a, 305b such as discussed herein) an input waveguide 320, an interferometric waveguide 325, and a slab waveguide 310. In this variation, the input waveguide 320 has a first width W₁ that is narrower than a second width W₂ of the interferometric waveguide 325. In these instances, when the input waveguide 320 (which is centered relative to the interferometric waveguide 325) transitions to the interferometric waveguide 325, the second mode (e.g., TE02 mode) will be generated such that the first and second mode are in phase at the interface between the input waveguide 320 and the interferometric waveguide 325. In these variations, the interferometric waveguide 325 will be sized with a length L that is an even integer multiple of half beat lengths for the first (e.g., shorter) target wavelength, so that the first target wavelength will be in phase at the interface between the interferometric waveguide 325. The length L is also an odd integer multiple of half beat lengths for the second (e.g., longer) target wavelength, so that the second target wavelength will be out phase at the interface between the interferometric waveguide 325. Accordingly, light entering the slab waveguide 310 (represented by example first and second light beams 330, 332) may diffract at a more similar diffraction angle as compared to the waveguide interface shown in FIG. 2. In instances where the first and second target wavelengths are separated by a half beat lengths, these interferometric waveguides 325 may be designed to have ratios of N:N+1 where N is an odd integer (e.g., 1:2, 3:4, 5:6, or the like).

FIG. 3B shows a second variation of a photonic integrated circuit 340 that may be configured similarly to the photonic integrated circuit 300 of FIG. 3A, except that the first width W₁ of the input waveguide 320 is wider than the second width W₂ of the interferometric waveguide 325. In these instances, when the input waveguide transitions to the interferometric waveguide 325, the second mode (e.g., TE02 mode) will be generated such that the first and second mode are out of phase at the interface between the input waveguide 320 and the interferometric waveguide 325. In these variations, the interferometric waveguide 325 will be sized with a length L that is an odd integer multiple of half beat lengths for the first (e.g., shorter) target wavelength, so that the first target wavelength will be in phase at the interface between the interferometric waveguide 325. The length L is also an even integer multiple of half beat lengths for the second (e.g., longer) target wavelength, so that the second target wavelength will be out phase at the interface between the interferometric waveguide 325. In instances where the first and second target wavelengths are separated by a half beat lengths, these interferometric waveguides 325 may be designed to have ratios of N:N+1 where N is an even integer (e.g., 2:3, 4:5, 6:7, or the like).

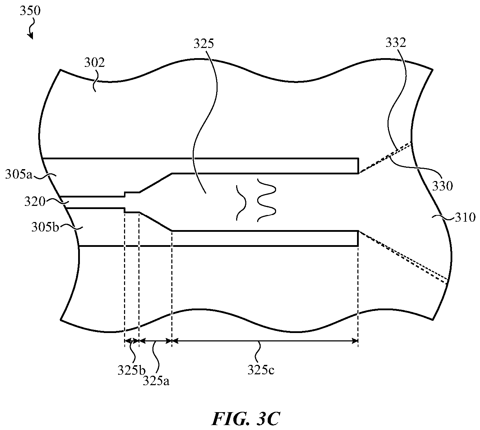

While the interferometric waveguide 325 is shown in FIGS. 3A and 3B as having a constant width W₂ across its length L, it should be appreciated that in some instances the width of the interferometric waveguide 325 may vary along one or more portions of its length. For example, FIG. 3C shows a variation of a photonic integrated circuit 350, which may be configured as shown in FIG. 3B except that the interferometric waveguide 325 has a tapered section 325a positioned between a first section having a first straight section 325b (e.g., that is connected to the input waveguide 320) and a second straight section 325c (e.g., that is connected to the slab waveguide 310). In these instances, the taper section 325a may be used to help generate the TE02 mode and/or expand the size of the interferometric waveguide 325, which may help further reduce back reflections at the interface between the interferometric waveguide 325 and the slab waveguide 310.

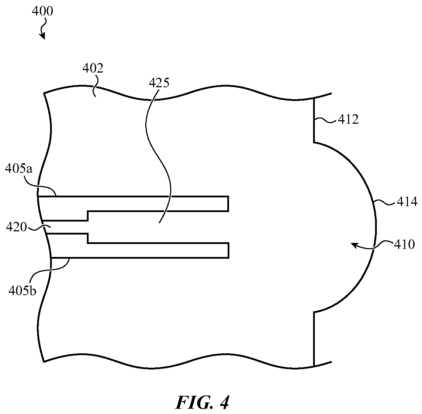

The multimode waveguide interfaces described herein may be used at any number of interfaces within a photonic integrated circuit. For example, FIG. 4 shows an example of a photonic integrated circuit 400 that utilizes a multimode waveguide interface to expand the width of a light beam before it is emitted from an output facet 412. Specifically, a waveguide layer 402 may be patterned to define (e.g., using first and second cavities 405a, 405b such as discussed herein) an input waveguide 420, an interferometric waveguide 425, and a slab waveguide 410. The slab waveguide 410 may extend between the interferometric waveguide 425 and the output facet 412, such that light exiting the interferometric waveguide 425 may diverge within the plane of the waveguide layer 402 before reaching the output facet 412. In some instances, the output facet 412 may be shaped with a curve 414 that is configured to further change the divergence of the light as it exits the photonic integrated circuit 400. The use of a multimode waveguide interface may provide a more consistent beam divergence, as a function of wavelength across the operating wavelength range, or light that exits the photonic integrated circuit 400 through the output facet 412.

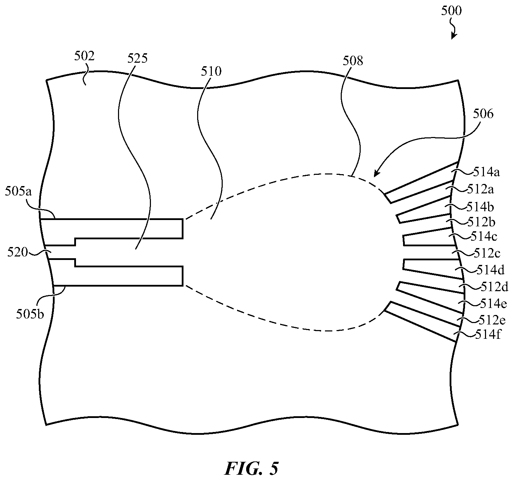

FIG. 5 shows an example of a photonic integrated circuit 500 that utilizes a multimode waveguide interface as part of an optical splitter 506. Specifically, a waveguide layer 502 may be patterned to define (e.g., using first and second cavities 505a, 505b such as discussed herein) an input waveguide 520, an interferometric waveguide 525, and a slab waveguide 510. The waveguide layer 502 is also patterned (e.g. using a plurality of cavities 514a-514f) to define a plurality of output waveguides 512a-512e.

In these instances, the slab waveguide 510 acts a free propagation region to optically couple light from the input waveguide 520 to the plurality of output waveguides 512a-512e. Light introduced from the input waveguide 520 (via the interferometric waveguide 525) into the slab waveguide 525 will traverse the free propagation region to split the light between the plurality of output waveguides 512a-512e. While a boundary of slab waveguide 510 is depicted in FIG. 5 by a dashed line 508, it should be appreciated that the actual boundary of the slab waveguide 510 may be positioned at any portion of the waveguide layer 502 that will not impact the operation of the optical splitter 506. The multimode waveguide interface of FIG. 5 may help reduce the wavelength-dependent variations in how the light is split between the output waveguide 512a-512e across the operating wavelength range.

The foregoing description, for purposes of explanation, uses specific nomenclature to provide a thorough understanding of the described embodiments. However, it will be apparent to one skilled in the art, after reading this description, that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art, after reading this description, that many modifications and variations are possible in view of the above teachings.

## Claims

1. A photonic integrated circuit, comprising:
a light source unit operable to generate light at a plurality of wavelengths spanning an operating wavelength range;
an input waveguide positioned to receive light of the plurality of wavelengths;
an interferometric waveguide connected to the input waveguide at a first interface; and
a slab waveguide connected to the interferometric waveguide at a second interface, wherein:
the interferometric waveguide is configured to convert, for each wavelength in the operating wavelength range, a portion of a first mode of light into a second mode of light;
the interferometric waveguide is configured such that, for a first target wavelength in the operating wavelength range, the first mode of light and second mode of light will be in phase at the second interface; and
the interferometric waveguide is configured such that, for a second target wavelength in the operating wavelength range, the first mode of light and second mode of light will be out of phase at the second interface.

2. The photonic integrated circuit of any of claim 1, wherein:
the input waveguide is centered relative to the interferometric waveguide.

3. The photonic integrated circuit of claim 1 or claim 2, wherein:
the interferometric waveguide comprises a tapered section.

4. A photonic integrated circuit, comprising:
a light source unit operable to generate light at a plurality of wavelengths spanning an operating wavelength range;
an input waveguide having a first width positioned to receive light of the plurality of wavelengths;
an interferometric waveguide having a second width and connected to the input waveguide at a first interface; and
a slab waveguide connected to the interferometric waveguide at a second interface, wherein:
the first width is narrower than the second width;
the interferometric waveguide is configured to convert, for each wavelength in the operating wavelength range, a portion of a first mode of light into a second mode of light, such that the first and second modes have a phase difference with a corresponding half beat length; and
the interferometric waveguide has a length that is:
for a first target wavelength in the operating wavelength range, an even integer number of half beat lengths; and
for a second target wavelength in the operating wavelength range, an odd integer number of half beat lengths.

5. The photonic integrated circuit of claim 4, wherein:
the input waveguide is centered relative to the interferometric waveguide.

6. The photonic integrated circuit of claim 4 or claim 5, wherein:
the first target wavelength and the second target wavelength are separated by a half beat length.

7. The photonic integrated circuit of any of claims 4 to 6, wherein a wavelength ratio between the first wavelength and the second wavelength is 1:2.

8. A photonic integrated circuit, comprising:
a light source unit operable to generate light at a plurality of wavelengths spanning an operating wavelength range;
an input waveguide having a first width positioned to receive light of the plurality of wavelengths;
an interferometric waveguide having a second width and connected to the input waveguide at a first interface; and
a slab waveguide connected to the interferometric waveguide at a second interface, wherein:
the first width is wider than the second width;
the interferometric waveguide is configured to convert, for each wavelength in the operating wavelength range, a portion of a first mode of light into a second mode of light, such that the first and second modes have a phase difference with a corresponding half beat length; and
the interferometric waveguide has a length that is:
for a first target wavelength in the operating wavelength range, an odd integer number of half beat lengths; and
for a second target wavelength in the operating wavelength range, an even integer number of half beat lengths.

9. The photonic integrated circuit of claim 8, wherein:
the input waveguide is centered relative to the interferometric waveguide.

10. The photonic integrated circuit of claim 8 or claim 9, wherein:
the first target wavelength and the second target wavelength are separated by a half beat length.

11. The photonic integrated circuit of any preceding claim , wherein:
the second target wavelength is longer than the first target wavelength.

12. The photonic integrated circuit of any preceding claim , wherein:
the first mode is a TE00 mode and the second mode is a TE02 mode.

13. The photonic integrated circuit of any preceding claim, comprising:
an optical splitter, wherein the optical splitter comprises:
the input waveguide;
the interferometric waveguide;
the slab waveguide; and
a plurality of output waveguides.

14. The photonic integrated circuit of any of claims 8 to 13, wherein a wavelength ratio between the first wavelength and the second wavelength is 2:3.
